# FASCICULE DE BREVET EUROPEEN

(11) **EP 3 542 203 B1**
(45) Date de publication et mention de la délivrance du brevet: **28.06.2023**
(21) Numéro de dépôt: 17811636.4
(22) Date de dépôt: 16.11.2017
(51) Int. Cl.: G02B 7/183, F24S 23/74, F24S 23/70, F24S 30/425, G02B 5/10, G02B 7/182

(54) **RÉFLECTEUR À CONCEPTION AMÉLIORÉE ET SON PROCÉDÉ DE FABRICATION POUR LE DOMAINE DE L'ÉNERGIE SOLAIRE**
REFLEKTOR MIT VERBESSERTEM DESIGN UND DESSEN HERSTELLUNGSVERFAHREN FÜR DAS GEBIET DER SONNENENERGIE
REFLECTOR OF IMPROVED DESIGN AND ITS MANUFACTURING PROCESS, FOR THE FIELD OF SOLAR ENERGY

(30) Priorité: 16.11.2016 FR 1661095
(43) Date de publication de la demande: 25.09.2019
(73) Titulaire: Commissariat à l'énergie atomique et aux énergies alternatives, 75015 Paris (FR); ALSOLENTECH, 33700 Merignac (FR)
(72) Inventeur: VIDAL, Frédéric, 38230 Charvieu (FR); LASCAUX, Vincent, 33700 Merignac (FR); MAGNE, Didier, 33140 Villenave D'Ornon (FR); MAILLARD, Yorick, 33290 Le Pian-Medoc (FR)
(74) Mandataire: Brevalex
(86) Numéro de dépôt international: PCT/FR2017/053140
(87) Numéro de publication internationale: WO 2018/091832

(56) Documents cités:
- DE-A1-102008 051 807
- FR-A1- 3 058 801
- US-A1- 2013 314 813
- US-A1- 2014 144 428

## Description

### DOMAINE TECHNIQUE

La présente invention se rapporte au domaine de la fabrication de réflecteurs à miroir mis en forme pour réfléchir et orienter la lumière.

Elle concerne plus précisément la fabrication de réflecteurs dont la structure de support du miroir est destinée à être mobile en rotation selon au moins un axe de pivotement, afin de pouvoir orienter la lumière reçue selon différents angles.

L'invention s'applique en particulier au domaine de l'énergie solaire, avec les réflecteurs destinés à la réalisation de champs de réflecteurs pour centrale solaire thermodynamique à concentration, de préférence du type à miroirs cylindro-paraboliques, ou à miroirs linéaires de Fresnel.

### ÉTAT DE LA TECHNIQUE ANTÉRIEURE

Pour la fabrication d'un réflecteur comprenant un miroir supporté par une structure de support, il est habituellement prévu un moule sur lequel est assemblé provisoirement le miroir, le moule donnant la forme définitive à ce miroir. Ensuite, il est réalisé une étape de mise en position du miroir par rapport à la structure de support, par déplacement relatif entre le moule supportant le miroir et cette même structure.

Une technique connue consiste à faire en sorte qu'à la fin de l'étape précitée, le miroir se retrouve à distance de la structure de support, ces deux éléments adoptant leur position relative définitive. Dans ce cas de figure, des cordons ou des blocs de colle préalablement installés sur la structure de support ou sur le miroir, sont déformés au cours de cette étape de mise en place du miroir. Après séchage des cordons ou des blocs de colle déformés, ceux-ci assurent la liaison mécanique entre le miroir et sa structure de support.

Cette solution, décrite par exemple dans le document US 20090260753A1, présente cependant des inconvénients dont les principaux sont décrits ci-dessous.

Tout d'abord, chaque réflecteur présente en général plusieurs éléments de miroir mis en forme, qui s'étendent à la manière d'une seule pièce sur toute la surface du réflecteur. Lors de l'étape de mise en place du miroir, le déplacement relatif entre d'une part l'ensemble des éléments de miroir de surface très élevée porté par le moule volumineux, et d'autre part la structure de support aux dimensions analogues, rend la manipulation ainsi que le positionnement délicats. Ces éléments peuvent en effet chacun mesurer entre 4 et 12 m de long.

En outre, le collage est obtenu ici par chauffage et ramollissement des blocs de colle. Ce chauffage est significatif puisque le point de fusion/ramollissement de la colle doit être supérieur aux températures de fonctionnement du réflecteur. Par conséquent, durant le chauffage, il existe un risque de déformation du moule portant le miroir, et/ou un risque de déformation de la structure de support. Cela peut conduire à un mauvais contrôle de la surface finale du miroir, et donc à une perte d'efficacité pour la centrale solaire associée.

De plus, pour ces opérations de collage, les temps de chauffe et de refroidissement sont relativement importants. En effet, les éléments à coller présentent de fortes inerties thermiques, et les puissances de chauffe et de refroidissement doivent être correctement maîtrisées afin d'éviter toute surchauffe des structures, propice à l'apparition des déformations parasites évoquées ci-dessus. En conséquence, le procédé requiert une énergie thermique importante, il est lent, et les temps d'occupation du moule sont significatifs. Compte tenu du nombre de réflecteurs à fabriquer pour la constitution d'un champ de réflecteurs, il en découle une nécessité d'augmenter le nombre de moules et d'outillages pour le collage, induisant des impacts significatifs sur les coûts de fabrication de ces réflecteurs.

Egalement, en cas de casse d'un miroir in situ sur la centrale solaire, le remplacement de ce dernier s'avère complexe et coûteux. Une solution consiste à remplacer l'intégralité du réflecteur, mais cette solution est extrêmement coûteuse. Une autre solution réside dans le remplacement de la partie cassée du miroir, mais cela nécessite l'utilisation du moule et la mise en oeuvre du procédé de chauffage de la colle, ce qui conduit à préférer effectuer cette réparation en usine après avoir rapatrié le réflecteur endommagé. Dans tous les cas, il s'agit d'une opération délicate car il s'avère difficile de retirer les résidus de colle et de miroir cassé.

Enfin, la forme de la structure de support doit être adaptée à la forme finale du miroir qu'elle supporte, car la variation de l'épaisseur de colle entre ces deux éléments est limitée. En d'autres termes, une même structure de support n'est souvent pas capable de s'adapter à tous types de rayons de courbure des miroirs d'un champ solaire donné. Ainsi, lorsque les rayons de courbure des miroirs sont très différents entre deux réflecteurs, il peut être nécessaire de prévoir des structures de support de formes différentes. Cette non-standardisation de la structure de support pour un même champ de réflecteur peut non seulement conduire à une augmentation des coûts de fabrication, mais également à un accroissement des besoins en maintenance.

Pour répondre à ce dernier inconvénient, il a été proposé une solution décrite dans le document WO 2012/110438. Cette solution prévoit des éléments de jonction entre le miroir et la structure de support, ce qui permet notamment de standardiser la forme de cette structure. Cependant, les autres inconvénients décrits ci-dessus subsistent.

Un autre réflecteur est décrit dans le document DE 10 2008 051807 A1.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a tout d'abord pour objet un réflecteur comprenant les caractéristiques de la revendication 1.

L'invention est tout d'abord avantageuse en ce qu'elle prévoit de scinder le miroir en plusieurs éléments de miroir distincts, ce qui facilite globalement leur manipulation ainsi que leur implantation sur la structure de support. Cette implantation est d'ailleurs facilitée en associant à cet élément de miroir un châssis maintenant sa forme et formant une interface entre la structure de support et l'élément de miroir, et en assemblant mécaniquement de façon réversible le châssis sur cette structure. Les caractères mécanique et réversible / démontable des moyens de fixation utilisés permettent non seulement de faciliter le montage, mais également de simplifier le démontage en cas de nécessité de remplacement de l'un des éléments de miroir, par exemple après un endommagement de ce dernier.

L'assemblage des composants du réflecteur est d'autant plus simple que le module, formé par l'élément de miroir et son châssis, peut être fabriqué avant d'être assemblé sur la structure de support. Il suffit alors de placer le module sur la structure de support comportant une surface de référence, puis d'assembler les moyens de fixation mécanique, sans nécessiter de réglage précis. Le simple positionnement sur cette surface d'appui de référence suffit à s'assurer du bon positionnement relatif entre l'axe de pivotement du réflecteur, et l'axe optique de l'élément de miroir. Ces opérations de positionnement et de fixation peuvent d'ailleurs être effectuées in situ sur la centrale solaire, que ce soit lors de la fabrication du réflecteur, ou pour une opération de maintenance visant à remplacer un ou plusieurs éléments de miroir endommagés / défectueux. Plus généralement, ces opérations de positionnement et de fixation des modules sur la structure de support peuvent être réalisées sur un site autre que celui sur lequel a été réalisé l'assemblage de l'élément de miroir sur son châssis. En effet, les opérations de fixation ne nécessitent aucun outillage de précision, contrairement aux opérations de l'art antérieur visant à mettre en forme le miroir ou à réaliser la surface d'appui de référence, qui sont des opérations généralement inenvisageables sur site.

Par ailleurs, en raison de la simplicité de ces opérations qui ne nécessitent pas de réglage particulier, il peut être envisagé d'automatiser la fabrication de tels réflecteurs, pour en diminuer encore davantage les coûts de production.

A cet égard, il est noté que grâce à la définition de la surface d'appui de référence par des points de contact sur la structure de support, en cas de déformation extrême de celle-ci par exemple causée par le vent et/ou la neige, le risque de transmission de ces déformations au châssis et à l'élément de miroir reste réduit.

L'invention présente également d'autres avantages. Notamment, grâce à la conception particulière du châssis avec ses longerons et ses traverses, l'élément de miroir peut être fixé sur les longerons avant d'être mis en forme sur un moule. Seulement après, il peut être procédé à la fixation des longerons du châssis sur ses traverses, puis à la fixation du châssis sur la structure porteuse. Par conséquent, la phase de fixation de l'élément de miroir, par exemple par collage, devient décorrélée de sa phase de mise en forme sur le moule, ce qui évite les risques de déformations rencontrés dans l'art antérieur. En d'autres termes, dans ce cas de figure offert par la conception selon l'invention, il n'existe plus de risque de déformation du moule durant l'étape de chauffage, et encore moins de risque de déformation de la structure de support. De même, le cas échéant, le retrait de la colle lors de la polymérisation se produit avant la mise en forme sur le moule. Cela améliore la qualité de surface finale du miroir, et se traduit avantageusement par un gain d'efficacité pour la centrale solaire.

Egalement, puisque la fixation du miroir peut être effectuée en dehors des phases d'utilisation du moule, le temps d'occupation de ce moule est réduit de façon significative. Cela conduit avantageusement à une réduction des coûts d'outillage.

Enfin, la solution proposée permet de standardiser la forme de la structure de support, tout en conservant la possibilité de l'implanter dans des réflecteurs dont les miroirs présentent des rayons de courbure différents. C'est en effet le châssis qui s'adapte à la forme non-plane du miroir, ce même châssis pouvant quant à lui toujours coopérer de la même façon avec la structure de support, quelle que soit la forme du miroir.

De préférence, lesdits moyens de fixation de l'élément de miroir sont une colle, du scotch (c'est-à-dire un ruban adhésif), ou des moyens mécaniques du type vis ou rivets, ou autres. Chaque élément de miroir, notamment dans le cas des miroirs métalliques ou polymères, peut être fixé sur les longerons avec des moyens mécaniques autres que le collage, comme le clipsage, le rivetage, le soudage, le boulonnage, etc. De préférence, il s'agit de moyens de fixation non-réversibles, c'est-à-dire nécessitant leur destruction au moins partielle pour permettre la désolidarisation entre l'élément de miroir et les longerons du châssis. Ces moyens de fixation sont alors indifféremment dénommés non-réversibles ou non-démontables.

L'invention prévoit également les caractéristiques optionnelles suivantes, prises isolément ou en combinaison.

Lesdits moyens de fixation mécanique sont des moyens de fixation par vissage.

Lesdits moyens de fixation mécanique comprennent :
- les organes de positionnement prévus sur la structure de support, ces organes de positionnement prenant chacun la forme d'un goujon comprenant un épaulement formant l'un desdits points de contact, ainsi qu'une portion filetée faisant saille de l'épaulement et traversant un organe de positionnement complémentaire prévu sur le châssis ;
- un écrou enserrant l'organe de positionnement complémentaire entre l'épaulement et cet écrou.

Alternativement, une configuration inversée pourrait être réalisée, dans laquelle les goujons seraient prévus sur le châssis.

Les organes de positionnement complémentaires sont agencés sur les traverses des châssis, de préférence au niveau des extrémités de ces traverses.

Les goujons sont agencés orthogonalement à ladite surface d'appui de référence, celle-ci étant parallèle audit au moins un axe de pivotement du réflecteur.

Les traverses s'étendent sensiblement orthogonalement audit au moins un axe de pivotement du réflecteur, et lesdits longerons s'étendent sensiblement orthogonalement aux traverses et parallèlement à un axe de courbure de l'élément de miroir.

Des joints de colle sont interposés entre la surface non-réfléchissante de l'élément de miroir et les longerons du châssis, lesdits joints de colle présentant sensiblement tous la même épaisseur.

Les longerons de chaque châssis sont fixés aux traverses à l'aide de points de fixation réalisés par clinchage. D'autres techniques de fixation conventionnelles sont néanmoins possibles, comme le rivetage, le soudage, le boulonnage, vissage, collage, etc.

Chaque élément de miroir et réalisé à base de verre, d'acier, d'aluminium, d'un matériau polymère ou de tout autre matériau de surface réfléchissante.

Chaque élément de miroir présente une surface comprise entre 0,4 et 4 m², et de préférence de l'ordre de 1 m².

Chaque élément de miroir présente de préférence une forme à simple courbure ou à double courbure. Les éléments de miroirs peuvent en effet présenter une forme à double courbure en utilisant par exemple des longerons précourbés et un outillage de fixation des longerons adapté.

L'invention a également pour objet un champ de réflecteurs comprenant une pluralité de réflecteurs tel que celui décrit ci-dessus.

De préférence, le champ comporte au moins deux réflecteurs avec des miroirs de formes différentes, ces deux réflecteurs comprenant une structure de support de forme identique. De préférence, toutes ces structures de support sont identiques au sein d'un même champ, et peuvent même être employées pour la constitution de plusieurs champs. A titre d'exemple, il peut être prévu une seule forme de structure de support pour huit rayons de courbures différents sur les miroirs d'un même champ.

L'invention a également pour objet une centrale solaire thermodynamique à concentration comprenant un champ de réflecteurs tel que mentionné précédemment, ladite centrale étant préférentiellement du type à miroirs cylindro-paraboliques, ou à miroirs linéaires de Fresnel.

L'invention a enfin pour objet un procédé de fabrication d'un tel réflecteur comprenant, associées à chaque élément de miroir, les étapes suivantes :
- positionnement de l'élément de miroir sur un outillage plan, de sorte que l'élément de miroir adopte provisoirement une forme plane ;
- fixation, de préférence par collage, des longerons du châssis sur la surface non-réfléchissante de l'élément de miroir maintenu sur l'outillage plan;
- mise en place sur un moule de l'élément de miroir équipé des longerons, cette mise en place conduisant l'élément de miroir, lorsque celui-ci présente une forme non-plane, à se déformer élastiquement de façon à adopter sa forme définitive ;
- fixation des longerons du châssis sur les traverses, pendant que la forme définitive de l'élément de miroir est maintenue par le moule, cette étape permettant ainsi de positionner précisément l'élément de miroir vis-à-vis des points d'appuis des traverses ;
- après retrait du moule, mise en place du châssis équipé de l'élément de miroir, sur la structure de support ; et
- fixation du châssis sur la structure de support.

Il est noté que les étapes de ce procédé peuvent être réalisées sur de sites différents. Par exemple, la fixation des longerons du châssis sur la surface non-réfléchissante de l'élément de miroir, peut être effectuée sur un site particulier. Plusieurs ensembles de la sorte peuvent être fabriqués, avant d'être empilés et expédiés vers un autre site pour la mise en oeuvre de l'étape de fixation des longerons sur les traverses du châssis. En raison de la forme sensiblement plane des ensembles résultant de cette étape de fixation, leur empilement pendant le transport présente un encombrement réduit, en comparaison de celui d'un empilement incorporant des miroirs à courbures.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- les figures 1a à 1c représentent des vues en perspective d'une centrale solaire selon un mode de réalisation préféré de l'invention, comprenant un capteur solaire ainsi qu'un champ de réflecteurs du type Fresnel linéaires ;
- la figure 2 est une vue en perspective d'un réflecteur du champ montré sur la figure précédente ;
- la figure 3 représente une vue de côté de celle de la figure précédente ;
- la figure 4 représente une vue de côté de la structure de support du réflecteur montrée sur les figures 2 et 3 ;
- la figure 5 est une vue schématique de dessus montrant la coopération entre les organes de positionnement prévus sur la structure de support, et les organes de positionnement complémentaires prévus sur un châssis portant un élément de miroir ; et
- les figures 6a à 6d schématisent différentes étapes d'un procédé de fabrication du réflecteur montré sur les figures précédentes, selon un mode de réalisation préféré de l'invention.

### EXPOSÉ DÉTAILLÉ DE MODES DE RÉALISATION PARTICULIERS

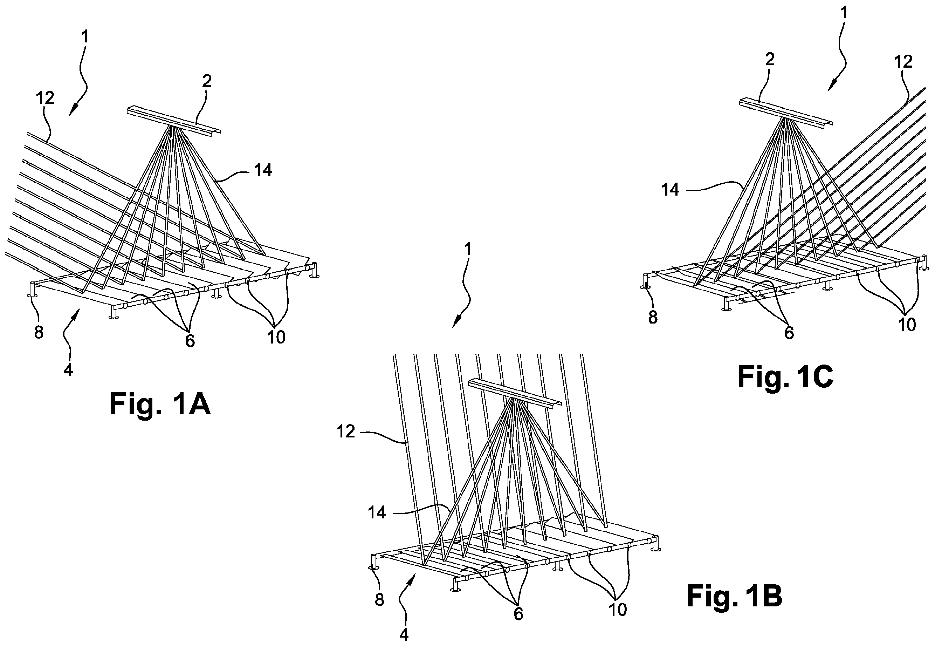

En référence tout d'abord aux figures 1a à 1c, il est représenté une centrale solaire thermodynamique à concentration. Cette centrale 1 comprend un capteur solaire 2 ainsi qu'un champ de réflecteurs 4 concentrant le rayonnement solaire sur le capteur 2. La centrale est ici du type à miroirs linéaires de Fresnel, mais pourrait être alternativement du type à miroirs cylindro-paraboliques ou dans le cas d'une forme à double courbure, à miroirs de type heliostats de type « tour solaire» ou à miroirs parabolique de type « dish ».

Le champ 4 comprend une rangée de réflecteurs 6 agencés côte à côte. Comme cela sera détaillé ci-après, chaque réflecteur 6 comprend un miroir scindé en plusieurs éléments de miroir chacun assemblé sur une structure de support, via un châssis spécifique à l'invention. De plus, les structures de support sont montées rotatives sur un bâti 8, selon des axes de pivotement 10 préférentiellement parallèles. Leur pilotage en rotation peut être indépendant ou dépendant, et commandé de manière à concentrer au mieux le rayonnement solaire sur le capteur 2.

A cet égard, les figures 1a à 1c montrent trois configurations distinctes dans lesquelles les rayons lumineux incidents 12 ont des orientations différentes, chaque configuration étant associée à un calage en rotation particulier de l'ensemble des réflecteurs du champ 4, permettant d'orienter au mieux les rayons réfléchis 14 sur le capteur 2, en fonction de la position du soleil.

Il s'agit de préférence d'un capteur dit de haut flux, pour applications variées, par exemple chauffage d'un fluide caloporteur de type eau, huile ou sel fondu, ou encore pour le domaine photovoltaïque à concentration. Sa puissance est comprise entre plusieurs dizaines de kW/m² et quelques MW/m². Chaque réflecteur 6, de forme globale rectangulaire, présente une surface de plusieurs mètres carré. La précision généralement requise sur ce type de système est de l'ordre 0,1° pour le calage angulaire des réflecteurs.

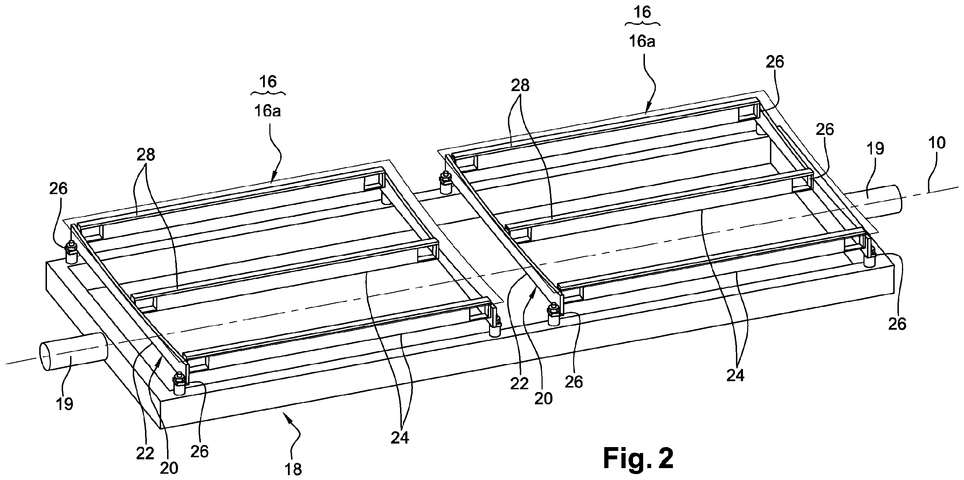

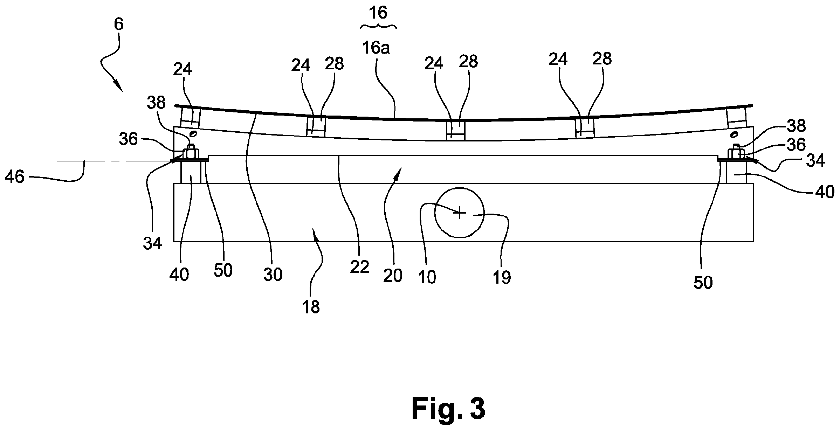

En référence à présent aux figures 2 et 3, il est représenté l'un des réflecteurs 6 du type de ceux utilisés dans la centrale 1 des figures précédentes.

Le réflecteur 6 comporte tout d'abord un miroir 16 de forme non plane, réalisé en verre sur une épaisseur de l'ordre de 4 mm, et typiquement comprise entre 0,1 et 7 mm. Sa forme est ici à simple courbure. Néanmoins, d'autres formes peuvent être envisagées, sans sortir du cadre de l'invention

Le miroir 16 du réflecteur 6 est scindé en plusieurs éléments de miroir 16a distincts et indépendants, agencés de manière adjacente et présentant également chacun une forme non-plane. Sur la figure 2, il a été représenté uniquement deux éléments de miroir, mais ces derniers peuvent être prévus en nombre largement supérieur. A titre d'exemple, chaque élément de miroir 16a peut présenter une surface de l'ordre de 1 m², alors que la surface globale du miroir 16 constitué par les éléments 16a peut par exemple être de l'ordre de 5 à 50 m².

Le réflecteur 6 comprend aussi une structure de support 18, par exemple de forme grossièrement parallélépipédique, pleine ou creuse. Elle peut être réalisée en acier, avec de grandes tolérances de fabrication qui permettent l'utilisation de procédés économiques. Elle présente des moyens permettant la rotation du réflecteur 6 selon l'axe de pivotement 10, ici deux organes de pivotement 19 agencés respectivement aux deux extrémités de la structure de support 18. Ces organes de pivotement 19, en forme de pions, sont destinés à coopérer avec le bâti de la centrale solaire.

La liaison mécanique entre la structure de support 18 et les éléments de miroir 16a n'est pas réalisée de manière directe, mais un châssis 20 est interposé entre chaque élément de miroir 16a et la structure 18. Chaque châssis 20, qui sera détaillé ci-après, comporte plusieurs pièces assemblées les unes aux autres et de préférence métalliques, mais elles pourraient alternativement être en céramique ou en matériau polymère.

Le châssis 20 comporte des traverses 22, de préférence deux traverses situées aux extrémités de ce châssis selon la direction de l'axe de pivotement 10. Ces traverses 22 comportent une surface supérieure légèrement incurvée de façon à présenter une sorte de parallélisme avec l'élément de miroir associé 16a, comme cela est visible sur la figure 3. Leur surface inférieure est préférentiellement plane.

Les traverses 22 s'étendent sensiblement orthogonalement à l'axe de pivotement 10, et portent fixement des longerons 24, par exemple compris dans un nombre entre 3 et 7. Ces longerons 24 du châssis font saillie au-dessus des traverses 22, et sont agencées sensiblement orthogonalement aux traverses 22 ainsi que parallèlement à l'axe 10 et à l'axe de courbure de l'élément de miroir 16a. Les longerons 24 du châssis 20 sont fixés à leurs extrémités aux deux traverses 22 à l'aide de points de fixation mécanique réalisés par clinchage.

La surface supérieure des longerons 24 porte des joints de colle 28, coopérant avec une surface non-réfléchissante 30 de l'élément de miroir 16a. Cette surface 30 correspond à la surface opposée à la surface fonctionnelle de l'élément de miroir, destinée à réfléchir le rayonnement solaire.

Dans l'invention, la forme du châssis 20 s'adapte à celle de l'élément de miroir 16a. Par conséquent, les joints de colle 28 présentent sensiblement tous la même épaisseur. Ils sont par ailleurs continus le long de chaque longeron 24, ou bien interrompus le long de ces derniers, par exemple en adoptant une configuration multipoints.

La colle employée peut être du type colle pâteuse polyuréthane mono-composant, par exemple de la colle vendue par la société 3M^{©} sous la référence « Polyurethane Adhesive Sealant 560^{©} ». Un autre exemple est la colle vendue par la société Hutchinson/ljf^{©} sous la référence « PR1440^{©} »«<<<. La viscosité de la colle choisie est préférentiellement suffisante pour rester localisée au niveau de la liaison entre la surface non-réfléchissante 30 et les longerons 24.

La colle est choisie, plus particulièrement, parmi les colles ayant après séchage un module de Young compris entre 2 et 60 MPa, et une dureté comprise entre 20 et 60 shore A.

Chaque châssis 20 présente donc une forme adaptée à la forme de son élément de miroir associé 16a, grâce à la liberté de positionnement et de fixation des longerons 24 sur les traverses 22. Cela implique que la forme de ces châssis diffère en fonction du réflecteur sur lequel ils sont agencés dans le champ de réflecteurs. En revanche, pour une plus grande standardisation, il est prévu que la structure 18 de chaque réflecteur 6 du champ de réflecteur soit de forme identique, même pour des réflecteurs portant des miroirs de formes différentes.

Le réflecteur 6 est également équipé de moyens de fixation mécanique démontables 34, permettant la montage réversible du châssis 20 sur la structure de support 18. Ces moyens 34 sont préférentiellement des éléments vissés, comme des écrous 36 coopérant avec des tiges filetées 38.

Préférentiellement, comme cela est le mieux visible sur la figure 3, les tiges filetées 38 sont intégrées à l'extrémité de goujons 40 formant des organes de positionnement du châssis 20. Ces goujons 40 font partie intégrante de la structure de support 18, en étant fixés sur les armatures de cette structure 18.

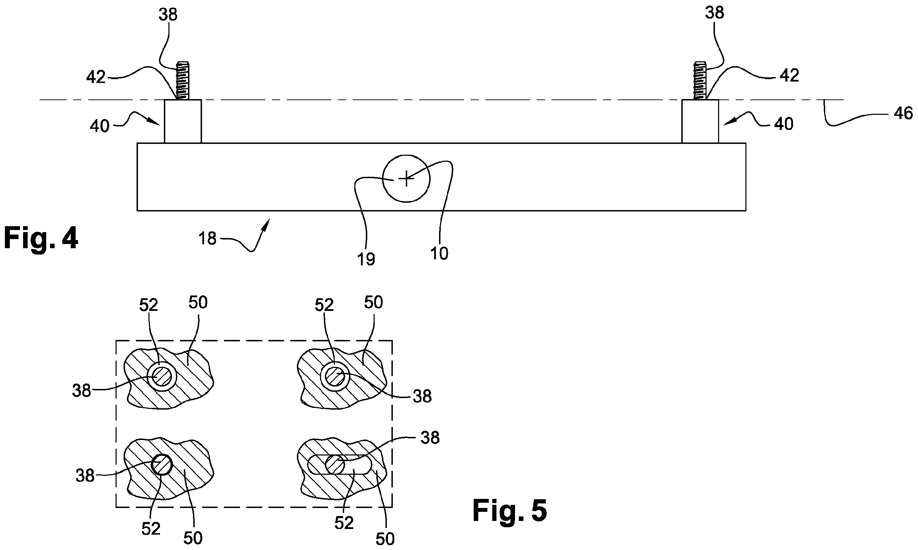

En référence conjointement aux figures 3 et 4, il est noté que chaque goujon 40 présente une base plus large, définissant un épaulement 42 au niveau de la jonction avec sa tige filetée 38. Cet épaulement 42 forme un point de contact pour le châssis. Les goujons 40 sont prévus au nombre de trois ou quatre, répartis à la périphérie du châssis associé 20. Ils sont agencés orthogonalement à l'axe de pivotement 10, celui-ci étant parallèle à une surface d'appui de référence 46 définie conjointement par les quatre points de contact 42.

Ainsi, le module formé par le châssis 20 et son élément de miroir associé 16a peut être positionné précisément sur la structure de support 18, sans requérir de réglage particulier mais uniquement en plaçant le châssis 20 sur les points de contact formés par les épaulements 42. Pour ce faire, les traverses 22 du châssis comportent au niveau de leurs extrémités des organes de positionnement complémentaires 50, de préférence en forme de platines. Ces platines 50 sont percées d'un orifice traversé par la tige filetée 38, et elles viennent en appui sur les épaulements 42. Une fois le contact établi entre tous les épaulements 42 et leurs platines associées 50, il existe une certitude quant au positionnement précis du châssis 20 sur la structure 18, et donc une certitude quant à la position de l'axe optique de l'élément de miroir 16a relativement à l'axe de pivotement 10.

Les écrous 36 servent ensuite à enserrer les platines 50 entre les épaulements 42 formant points de contact, et ces mêmes écrous 36.

La figure 5 montre que l'orifice 52 de chacune des quatre platines 50 peut coopérer de manière différente avec sa tige filetée associée 38. En effet, un seul ajustement précis peut être appliqué entre l'une des tiges 38 et son orifice 52, avec des diamètres sensiblement identiques. Pour deux autres assemblages, il peut être prévu un jeu radial important entre la tige 38 et l'orifice 52, permettant une liberté de positionnement dans le plan de la surface de référence 46. Enfin, le quatrième assemblage peut prévoir une tige 38 dans un orifice oblong 52, permettant une liberté de positionnement dans une direction du plan de la surface de référence 46.

Néanmoins, il est noté que les organes de positionnement 40 ne sont pas nécessairement des goujons incluant une tige filetée 38 pour la fixation du châssis. La fonctions d'appui / de support du châssis peut en effet être décorrelée de la fonction de fixation de châssis. Par conséquent, il est possible de prévoir de simples organes de positionnement 40 prévus sur la structure de support 18 et comprenant une simple zone d'appui comme un épaulement ou une surface d'extrémité, destinée à former l'un des points de contact 42 constituant la surface d'appui de référence, et coopérant avec un organe de positionnement complémentaire prévu sur le châssis 20. Les moyens de fixation du châssis peuvent alors être distincts de ces organes de positionnement 40.

En fonctionnement, la structure 18, le châssis 20 et le miroir formé par les éléments de miroir 16a sont solidaires les uns des autres, aucun mouvement relatif n'étant prévu entre ceux-ci, et notamment aucun mouvement relatif n'est prévu entre la structure de support 18 d'une part, et l'ensemble formé du miroir 16 et du châssis 20 d'autre part.

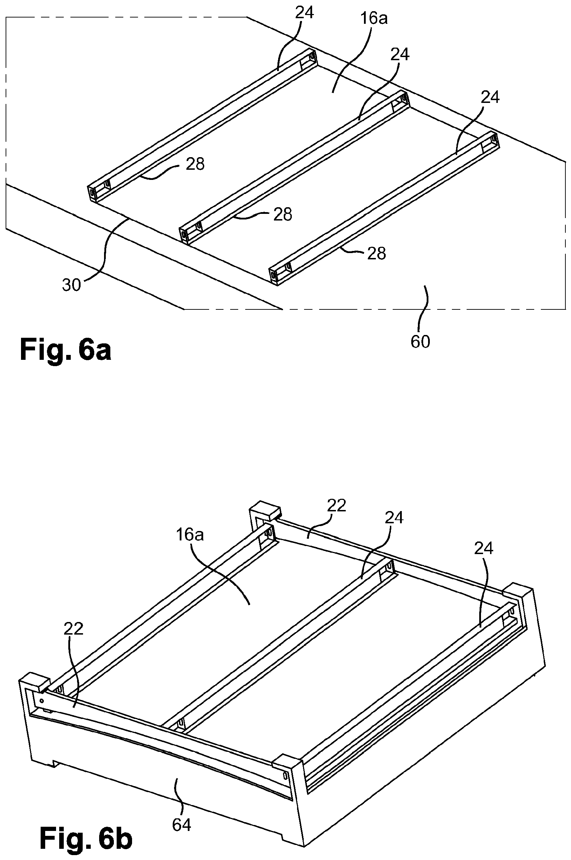

En référence à présent aux figures 6a à 6d, il va être décrit un procédé de fabrication du réflecteur 6 montré sur les figures précédentes.

Pour chaque élément de miroir 16a du réflecteur 6, le procédé comprend les étapes suivantes.

Tout d'abord, il est procédé au positionnement de l'élément de miroir 16a sur un outillage plan 60, par exemple un socle en marbre. Cette étape a pour but de plaquer l'élément de miroir 16a contre ce socle 60 afin qu'il adopte provisoirement une forme plane, correspondant à celle du socle, comme cela a été schématisé sur la figure 6a.

Ensuite, il est procédé au collage des longerons 24 sur la surface non-réfléchissante 30 de l'élément de miroir 16a, maintenu sur le socle 60. Il est par la suite réalisé la mise en place de l'élément de miroir 16 équipé des longerons 24, sur un moule 64 de forme appropriée. Cette étape a pour finalité de voir l'élément de miroir 16a se déformer élastiquement, et adopter sa forme définitive. Avantageusement, cette opération s'effectue en dehors du temps de collage.

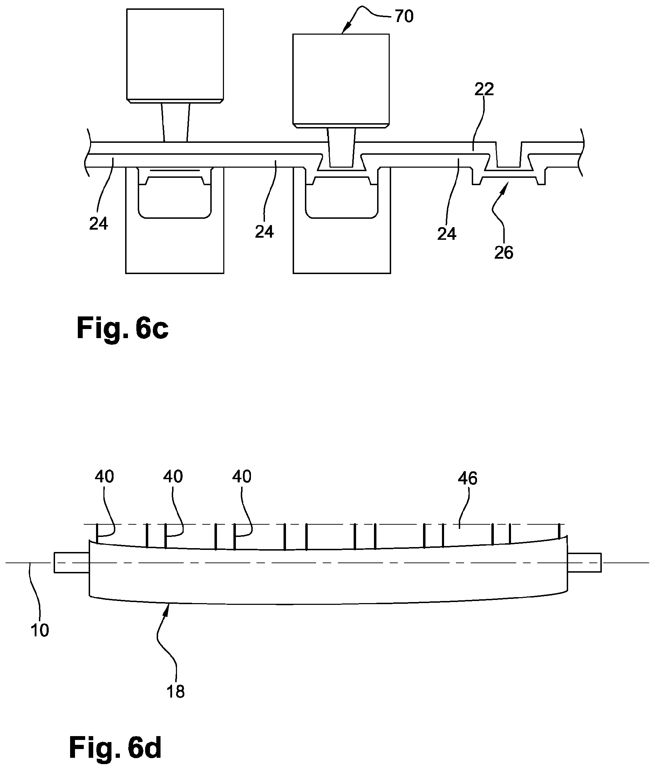

Ensuite, il est procédé à la fixation des longerons 24 sur les traverses 22, pendant que la forme définitive de l'élément de miroir 16a est maintenue par le moule 64, comme cela a été représenté sur la figure 6b. Pour ce faire, les traverses 22 sont amenées en regard des longerons 24, dont le positionnement est conditionné par la déformation élastique de l'élément de miroir 16a appliquée par le moule 64. Une fois la mise en position réalisée, les points de fixation mécanique 26 sont effectués, de préférence par clinchage à l'aide d'un outillage 70 approprié montré sur la figure 6c. La technique préférée de clinchage présente plusieurs avantages particulièrement utiles dans le cas d'une application solaire, comme le fait de ne pas nécessiter de métal ou de pièce d'apport, contrairement à un boulon ou un rivet, puisque la liaison est assurée par une déformation avec un système poinçon/matrice. De plus, elle permet une cadence élevée ainsi qu'une réduction des phénomènes de corrosion. En effet, dans le cas d'une liaison sur des traverses et des longerons en acier protégés par un couche de galvanisation, la liaison par clinchage permet d'éviter de mettre l'acier à nu, de sorte qu'une épaisseur minimale de galvanisation est conservée au niveau du point de liaison. De plus, l'absence de pièce d'apport permet de limiter les couples galvaniques qui pourraient apparaître entre les différents matériaux. Cette moindre sensibilité à la corrosion permet d'assurer une bonne tenue des performances de la centrale, sur toute sa durée de vie.

Cette technique de clinchage permet également une grande capacité d'ajustement de la position des points de fixation. Cela demeure intéressant pour réaliser des éléments de miroir 16a présentant des rayons de courbures très différents, et ce avec les mêmes traverses 22.

Après retrait du moule, il est procédé à la mise en place du châssis 20 équipé de l'élément de miroir 16a, sur la surface d'appui de référence 46 définie par la structure de support 18. A cet égard, il est noté que lors de la fabrication de la structure 18 représentée sur la figure 6d, les goujons 40 et points de contact 42 sont rapportés sur cette structure afin de définir la surface d'appui de référence 46 avec une précision de positionnement convenable, et ce dans une configuration où cette structure 18 est maintenue dans les mêmes conditions d'appui que sur le champ solaire. Cela permet de définir précisément et à moindre coût la surface de référence 46, tout en tenant compte des éventuelles déformations internes de la structure 18 en fonctionnement.

Enfin, le procédé est terminé par la fixation des traverses 22 sur la structure de support 18, via les écrous 36.

Bien entendu, diverses modifications peuvent être apportées par l'homme du métier à l'invention qui vient d'être décrite, uniquement à titre d'exemples non limitatifs.

## Revendications

1. Réflecteur (6) comprenant une structure de support (18) ainsi qu'un miroir (16) de forme non-plane, fixé au niveau de sa surface non-réfléchissante (30), ladite structure de support (18) étant équipée d'organes de pivotement (19) permettant la mise en rotation du réflecteur selon au moins un axe de pivotement (10),
dans lequel le miroir (16) est composé d'une pluralité d'éléments de miroir adjacents (16a) de forme non-plane,
dans lequel le réflecteur comporte en outre, associé à chaque élément de miroir (16a), un châssis (20) interposé entre la structure de support (18) et ledit élément de miroir associé (16a), lesdits châssis (20) étant indépendants les uns des autres et chacun associé à l'un des éléments de miroir (16a), chaque châssis (20) comportant des traverses (22) sur lesquelles sont fixés des longerons (24), la surface non-réfléchissante (30) de l'élément de miroir associé (16a) étant fixée sur les longerons (24) du châssis (20) à l'aide de moyens de fixation de l'élément de miroir associé (16a),
et dans lequel chaque châssis (20) est monté sur la structure de support (18) à l'aide de moyens de fixation mécanique démontables (36, 38), ladite structure de support (18) comprenant des organes de positionnement de chaque châssis (20), les organes de positionnement formant des points de contact (42) définissant ensemble une surface d'appui de référence (46) pour le châssis (20) portant l'élément de miroir associé (16a),
**caractérisé en ce que** chaque châssis (20) est associé à un unique élément de miroir (16a).

2. Réflecteur selon la revendication 1, dans lequel lesdits moyens de fixation de l'élément de miroir sont une colle, un ruban adhésif, ou des moyens mécaniques du type vis ou rivets, et de préférence des moyens de fixation non-réversibles.

3. Réflecteur selon l'une quelconque des revendications précédentes, dans lequel lesdits moyens de fixation mécanique (36, 38) sont des moyens de fixation par vissage.

4. Réflecteur selon l'une quelconque des revendications précédentes, dans lequel lesdits moyens de fixation mécanique comprennent :
- les organes de positionnement (40) prévus sur la structure de support, ces organes de positionnement prenant chacun la forme d'un goujon comprenant un épaulement (42) formant l'un desdits points de contact, ainsi qu'une portion filetée (38) faisant saille de l'épaulement et traversant un organe de positionnement complémentaire (50) prévu sur le châssis (20) ;
- un écrou (36) enserrant l'organe de positionnement complémentaire (50) entre l'épaulement (42) et cet écrou (36).

5. Réflecteur selon la revendication précédente, dans lequel les organes de positionnement complémentaires (50) sont agencés sur les traverses (22) des châssis (20), de préférence au niveau des extrémités de ces traverses.

6. Réflecteur selon l'une quelconque des revendications précédentes, dans lequel les traverses (22) s'étendent sensiblement orthogonalement audit au moins un axe de pivotement (10) du réflecteur, et en ce que lesdits longerons (24) s'étendent sensiblement orthogonalement aux traverses (22) et parallèlement à un axe de courbure de l'élément de miroir (16a).

7. Réflecteur selon l'une quelconque des revendications précédentes, dans lequel des joints de colle (28) sont interposés entre la surface non-réfléchissante (30) de l'élément de miroir (16a) et les longerons (24) du châssis (20), lesdits joints de colle (28) présentant sensiblement tous la même épaisseur.

8. Réflecteur selon l'une quelconque des revendications précédentes, dans lequel chaque élément de miroir (16a) et réalisé à base de verre, d'acier, d'aluminium, ou d'un matériau polymère.

9. Réflecteur selon l'une quelconque des revendications précédentes, dans lequel chaque élément de miroir (16a) présente une surface comprise entre 0,4 et 4 m², et de préférence de l'ordre de 1 m².

10. Réflecteur selon l'une quelconque des revendications précédentes, dans lequel chaque élément de miroir (16a) présente une forme à simple courbure ou à double courbure.

11. Champ de réflecteurs (4) comprenant une pluralité de réflecteurs (6) selon l'une quelconque des revendications précédentes.

12. Champ de réflecteurs selon la revendication précédente, comportant au moins deux réflecteurs (6) avec des miroirs (16) de formes différentes, et en ce que ces deux réflecteurs comprennent une structure de support (18) de forme identique.

13. Centrale solaire thermodynamique à concentration (1) comprenant un champ de réflecteurs (4) selon la revendication précédente, ladite centrale étant préférentiellement du type à miroirs cylindro-paraboliques, ou à miroirs linéaires de Fresnel.

14. Procédé de fabrication d'un réflecteur (6) selon l'une quelconque des revendications 1 à 10, comprenant, associées à chaque élément de miroir (16a), les étapes suivantes :
- positionnement de l'élément de miroir (16a) sur un outillage plan (60), de sorte que l'élément de miroir (16a) adopte provisoirement une forme plane ;
- fixation, de préférence par collage, des longerons (24) du châssis (20) sur la surface non-réfléchissante (30) de l'élément de miroir (16a) maintenu sur l'outillage plan (60) ;
- mise en place sur un moule (64) de l'élément de miroir (16a) équipé des longerons (24), cette mise en place conduisant l'élément de miroir, lorsque celui-ci présente une forme non-plane, à se déformer élastiquement de façon à adopter sa forme non-plane définitive ;
- fixation des longerons (24) du châssis (20) sur les traverses (22), pendant que la forme non-plane définitive de l'élément de miroir (16a) est maintenue par le moule (64) ;
- après retrait du moule (64), mise en place du châssis (20) équipé de l'élément de miroir (16a), sur la structure de support (18) ; et
- fixation du châssis (20) sur la structure de support (18),
**caractérisé en ce que** les longerons (24) du châssis (20) sont fixés sur la surface non-réfléchissante (30) d'un unique élément de miroir (16a).

## Patentansprüche

1. Reflektor (6), umfassend eine Tragstruktur (18) sowie einen Spiegel (16) von nicht-planer Form, der im Bereich seiner nicht-reflektierenden Fläche (30) befestigt ist, wobei die Tragstruktur (18) mit Schwenkorganen (19) ausgestattet ist, die das Drehen des Reflektors entlang mindestens einer Schwenkachse (10) ermöglichen,
wobei der Spiegel (16) aus einer Vielzahl von aneinandergrenzenden Spiegelelementen (16a) von nicht-planer Form zusammengesetzt ist,
wobei der Reflektor weiter, zu jedem Spiegelelement (16a) gehörig, einen Rahmen (20) umfasst, der zwischen der Tragstruktur (18) und dem zugehörigen Spiegelelement (16a) eingefügt ist, wobei die Rahmen (20) voneinander unabhängig sind und jeweils zu einem der Spiegelelemente (16a) gehören, wobei der Rahmen (20) Querträger (22) umfasst, an denen Längsträger (24) befestigt sind, wobei die nicht-reflektierende Fläche (30) des zugehörigen Spiegelelements (16a) mithilfe von Mitteln zum Befestigen des zugehörigen Spiegelelements (16a) an den Längsträgern (24) des Rahmens (20) befestigt ist,
und wobei jeder Rahmen (20) mithilfe von demontierbaren mechanischen Befestigungsmitteln (36, 38) an der Tragstruktur (18) montiert ist, wobei die Tragstruktur (18) Organe zum Positionieren jedes Rahmens (20) umfasst, wobei die Positionierorgane Kontaktpunkte (42) bilden, die zusammen eine Referenz-Auflagefläche (46) für den Rahmen (20), der das zugehörige Spiegelelement (16a) trägt, definieren,
**dadurch gekennzeichnet, dass** jeder Rahmen (20) zu einem einzigen Spiegelelement (16a) gehört.

2. Reflektor nach Anspruch 1, wobei es sich bei den Mitteln zum Befestigen des Spiegelelements um einen Klebstoff, ein Klebeband oder um mechanische Mittel vom Typ Schrauben oder Niete, und vorzugsweise um irreversible Befestigungsmittel handelt.

3. Reflektor nach einem der vorstehenden Ansprüche, wobei es sich bei den mechanischen Befestigungsmitteln (36, 38) um Mittel zur Schraubbefestigung handelt.

4. Reflektor nach einem der vorstehenden Ansprüche, wobei die mechanischen Befestigungsmittel umfassen:
- die an der Tragstruktur vorgesehenen Positionierorgane (40), wobei diese Positionierorgane jeweils die Form eines Bolzens annehmen, der eine Schulter (42), die einen der Kontaktpunkte bildet, sowie einen Gewindeabschnitt (38) umfasst, welcher von der Schulter vorspringt und durch ein komplementäres Positionierorgan (50), das am Rahmen (20) vorgesehen ist, hindurchgeht;
- eine Mutter (36), die das komplementäre Positionierorgan (50) zwischen der Schulter (42) und dieser Mutter (36) einklemmt.

5. Reflektor nach dem vorstehenden Anspruch, wobei die komplementären Positionierorgane (50) an den Querträgern (22) der Rahmen (20), vorzugsweise im Bereich der Enden dieser Querträger, angeordnet sind.

6. Reflektor nach einem der vorstehenden Ansprüche, wobei sich die Querträger (22) im Wesentlichen orthogonal zu mindestens einer Schwenkachse (10) des Reflektors erstrecken, und dadurch, dass sich die Längsträger (24) im Wesentlichen orthogonal zu den Querträgern (22) und parallel zu einer Krümmungsachse des Spiegelelements (16a) erstrecken.

7. Reflektor nach einem der vorstehenden Ansprüche, wobei Klebefugen (28) zwischen der nicht-reflektierenden Fläche (30) des Spiegelelements (16a) und den Längsträgern (24) des Rahmens (20) eingefügt sind, wobei die Klebefugen (28) im Wesentlichen alle die gleiche Dicke aufweisen.

8. Reflektor nach einem der vorstehenden Ansprüche, wobei jedes Spiegelelement (16a) auf Basis von Glas, Stahl, Aluminium, oder eines Polymermaterials hergestellt ist.

9. Reflektor nach einem der vorstehenden Ansprüche, wobei jedes Spiegelelement (16a) eine Fläche im Bereich zwischen 0,4 und 4 m², und vorzugsweise in der Größenordnung von 1 m², aufweist.

10. Reflektor nach einem der vorstehenden Ansprüche, wobei jedes Spiegelelement (16a) eine Form mit einfacher Krümmung oder mit doppelter Krümmung aufweist.

11. Reflektorenfeld (4), das eine Vielzahl von Reflektoren (6) nach einem der vorstehenden Ansprüche umfasst.

12. Reflektorenfeld nach dem vorstehenden Anspruch, das mindestens zwei Reflektoren (6) mit Spiegeln (16) unterschiedlicher Formen umfasst, und dadurch, dass diese zwei Reflektoren eine Tragstruktur (18) von identischer Form umfassen.

13. Konzentrierende thermodynamische Solaranlage (1), die ein Reflektorenfeld (4) nach dem vorstehenden Anspruch umfasst, wobei die Anlage vorzugsweise vom Typ mit parabolischen Zylinderspiegeln, oder mit linearen Fresnel-Spiegeln ist.

14. Verfahren zur Herstellung eines Reflektors (6) nach einem der Ansprüche 1 bis 10, das zu jedem Spiegelelement (16a) gehörig die folgenden Schritte umfasst:
- Positionieren des Spiegelelements (16a) auf einem planen Werkzeug (60), sodass das Spiegelelement (16a) vorübergehend eine plane Form annimmt;
- Befestigen, vorzugsweise durch Kleben, der Längsträger (24) des Rahmens (20) an der nicht-reflektierenden Fläche (30) des auf dem planen Werkzeug (60) gehaltenen Spiegelelements (16a);
- Platzieren des mit den Längsträgern (24) ausgestatteten Spiegelelements (16a) auf einer Form (64), wobei dieses Platzieren das Spiegelelement, wenn dieses eine nicht-plane Form aufweist, dazu bringt, sich elastisch zu verformen, um seine endgültige nicht-plane Form anzunehmen;
- Befestigen der Längsträger (24) des Rahmens (20) an den Querträgern (22), während die nicht-plane endgültige Form des Spiegelelements (16a) durch die Form (64) gehalten wird;
- nach Entfernen der Form (64), Platzieren des mit dem Spiegelelement (16a) ausgestatteten Rahmens (20) auf der Tragstruktur (18); und
- Befestigen des Rahmens (20) an der Tragstruktur (18), **dadurch gekennzeichnet, dass** die Längsträger (24) des Rahmens (20) an der nicht-reflektierenden Fläche (30) eines einzigen Spiegelelements (16a) befestigt sind.

## Claims

1. Reflector (6) comprising a support structure (18) and a mirror (16) with a non-plane shape, fixed at its non-reflecting surface (30), said support structure (18) being provided with pivot elements (19) for rotating the reflector about at least one pivot axis (10),
**characterised in that** the mirror (16) is composed of a plurality of adjacent mirror elements (16a) with a non-plane shape,
**in that** the reflector also comprises a frame (20) associated with each mirror element (16a), inserted between the structure support (18) and said associated mirror element (16a), said frames (20) being independent of each other and each being associated with a unique mirror element (16a), each frame (20) comprising cross-members (22) on which stringers (24) are fixed, the non-reflecting surface (30) of the mirror element (16a) being fixed on the stringers (24) of the frame (20) by means of mirror element attachment means,
and **in that** each frame (20) is mounted on the support structure (18) using removable mechanical attachment means (36, 38), said support structure (18) comprising positioning elements for each frame (20), the positioning elements forming contact points (42) that together define a reference bearing surface (46) for the frame (20) supporting the mirror element.

2. Reflector according to claim 1, **characterised in that** said attachment means of the mirror element are glue, scotch tape or mechanical means such as screws or rivets, and preferably non-reversible attachment means.

3. Reflector according to one of the preceding claims, **characterised in that** said mechanical attachment means (36, 38) are screwed attachment means.

4. Reflector according to any one of the preceding claims, **characterised in that** said mechanical attachment means comprise:
- positioning elements (40) provided on the support structure, each of these positioning elements being in the form of a stud comprising a shoulder (42) forming one of said contact points, and a threaded portion (38) projecting from the shoulder and passing through a complementary positioning element (50) provided on the frame (20);
- a nut (36) squeezing the complementary positioning element (50) between the shoulder (42) and this nut (36).

5. Reflector according to the preceding claim, **characterised in that** the complementary positioning elements (50) are arranged on the cross-members (22) of the frame (20), preferably at the ends of these cross-members.

6. Reflector according to any one of the preceding claims, **characterised in that** the cross-members (22) extend approximately orthogonal to said at least one reflector pivot axis (10), and **in that** said stringers (24) extend approximately orthogonal to the cross-members (22) and parallel to an axis of curvature of the mirror element (16a).

7. Reflector according to any one of the preceding claims, **characterised in that** glue joints (28) are inserted between the non-reflecting surface (30) of the mirror element(16a) and stringers (24) of the frame (20), said glue joints (28) all having approximately the same thickness.

8. Reflector according to any one of the preceding claims, **characterised in that** each mirror element (16a) is made based on glass, steel, aluminium, or a polymer material.

9. Reflector according to any one of the preceding claims, **characterised in that** each mirror element (16a) has a surface area of between 0.4 and 4 m², and preferably of the order of 1 m².

10. Reflector according to any one of the preceding claims, **characterised in that** each mirror element (16a) has a shape with single curvature or double curvature.

11. Reflector field (4) comprising a plurality of reflectors (6) according to any one of the preceding claims.

12. Reflector field according to the preceding claim, **characterised in that** it comprises at least two reflectors (6) with different shaped mirrors (16), and **in that** these two reflectors have an identically shaped support structure (18).

13. Concentrating thermodynamic solar power station (1) comprising a reflector field (4) according to the preceding claim, said power station preferably being of the type with cylindrical-parabolic mirrors, or linear Fresnel mirrors.

14. Method of manufacturing a reflector (6) according to any one of claims 1 to 10, **characterised in that** it comprises the following steps associated with each mirror element (16a):
- positioning the mirror element (16a) on plane tooling (60) such that the mirror element (16a) provisionally adopts a plane shape;
- attachment of stringers (24) of the frame (20) on the non-reflecting surface (30 ) of the mirror element (16a) held in place on the plane tooling (60), preferably by gluing;
- placement of the mirror element (16a) fitted with stringers (24) on a mould (64), this placement being such that when put into its position, and if it is not flat, the mirror element will be deformed elastically so as to adopt its final shape;
- attachment of stringers (24) of the frame (20) on the cross-members (22), while the final non-plane shape of the mirror element (16a) is maintained by the mould (64);
- after the mould (64) has been removed, placement of the frame (20) equipped with the mirror element (16a) on the support structure (18); and
- attachment of the frame (20) on the support structure (18).
